# DEMANDE DE BREVET EUROPEEN

(11) **EP 1 016 440 A1**
(43) Date de publication de la demande: **05.07.2000**
(21) Numéro de dépôt: 98500286.4
(22) Date de dépôt: 30.12.1998
(51) Int. Cl.: B01D 17/02, B01D 17/04, E02B 15/04

(54) **Séparateur d'huile**

(71) Demandeur: Construccions Mecaniques Escoda, S.A., 08330 Premia Del Mar (Barcelona) (ES)
(72) Inventeur: Escoda Salinas, Joseph, 08330 Premia del Mar (Barcelona) (ES)
(74) Mandataire: Manzano Cantos, Gregorio

(57) **Abrégé**

Dispositif séparateur d'huile d'un lit de mélange hydaulique ayant une bande transporteuse verticale le dispositif comprenant un ramasseur cuvette d'huile (7) associé à un bord ramasseur (6) qui s'étend sur la largeur de la bande (2) jusqu'à une distance de 1 ou 2 mm des bords de la bande pour éviter de recueillir l'eau accumulée aux extrémités de ladite bande (2) ledit ramasseur-cuvette (7) étant monté avec un moyen élastique (11) situé à une extrémité de sortie de l'élément tubulaire (9) de support de vidange et de basculement de la cuvette (7), de façon à centrer et associer élastiquement ledit ramasseur-cuvette (7) contre la face de la bande (2), pour assurer un ramassage sélectif de l'huile sans eau.

## Description

L'invention concerne, comme le titre l'indique, un dispositif destiné à séparer l'huile contenu dans un mélange hydraulique, du type relatif aux liquides réfrigérants, de graissage, lubrification ou analogue, où l'huile résiduelle peut créer des problèmes pour l'environnement. L'huile est ainsi retirée et peut être réutilisée pour des fonctions moins importantes. Cela concerne les machines-outils; les installations de graissage ou les machines de lavage; c'est-à-dire tout genre de machines ou d'installation utilisant des liquides réfrigérants, de graissage, lubrification, etc. qui généralement sont contaminées, du fait que les huiles proviennent du graissage des machines ou des pièces devant être graissées ou lavées.

Ladite huile crée une série de problèmes, dont certains sont polluants, tels que les vapeurs huileuses qui dans le cas des machines-outils lors de la rentrée dans de procédé d'usinage, s'évaporent et demeurent suspendues dans l'air.

L'huile étant moins dense et lourde que les réfrigérants, elle empêche l'oxidation dans les dépôts où se trouvent ces derniers en favorisant le développement de bactéries, les dépôts impliquent une réduction des performances des machines étant donné la présence innécessaire d'un produit nuisible.

### ETAT DE LA TECHNIQUE

Il y a beaucoup de dispositifs pour éliminer ladite huile résiduelle. Ils sont généralement basés sur un élément immergé dans les dépôts de réfrigérants, impregné d'huiles pour l'extraire et le séparer postérieurement.

Parmi lesquels nous pouvons remarquer les dispositis ayant deux systèmes:
1.- Ceux basés sur un disque métallique (qui peut être en métacrylate), tournant au moyen d'un petit moteur en immergeant, dans le bassin, une partie du disque impregnée d'huile et qui, à une position externe est muni d'une raclette réglable au moyen de vis séparant l'huile. Ledit système peut être efficace mas il doit fonctionner dans des conditions optimales, car toute erreur d'alignement dans le disque affecte directement son eficacité. Il existe une limitation du fait que ceux-ci sont très susceptibles au niveau du réfrigérant dans le dépôt.
2.- Ceux basés sur une bande continue de longueur adaptable. Celle-ci tourne au moyen d'un cordon monté à l'extrémité de celle-ci en effectuant la tension dans l'autre extrémité au moyen d'un contre-poids ou d'un tendeur. Ils ont aussi des raclettes qui peuvent être à la fois des récipients collecteurs. Le réglage est mécanique, et si la bande est trop pressée, elle peut être freinée en bloquant le système, et si la séparatin est trop grande, l'huile récupérée peut être insuffisante.

Ils sont tous basés sur la plus grande cohésion superficielle de l'huile par rapport à l'eau ou à d'autres liquides plus lourds.

Plus concrètement, dans le Brevet européen N° 053305412 de COMBROWSKI l'on revendique un dispositif de ce genre dans lequel la bande transporteuse (7-7a) a un séparateur (19-19a) ayant un tranchant (21-21a) orienté à l'inverse de la direction de rotation (C) de la bande (7-7a), une poulie de poids (18a) suspendue de celle-ci tombant à l'intérieur du dépôt de liquide (36) lequel est pourvu d'ailes (35) au moins dans un côté. Celles-ci dépassent les brides latérales (15a et 16a) et forment ainsi une roue à augets, en demeurant déformables ou réglables (35).

Selon ce brevet le séparateur (19, 19a) est fixé de façon mobile à l'intérieur de la chambre (5) dans la carcasse (1, 1a); en présentant une forme de plateau collecteur (20-20a) fixé par sa paroi arrière (33) à la paroi de la carcasse (25) au moyen de boulons à vis (23), en traversant perpendiculairement des rainures allongées (26), tandis que ledit séparateur (19) peut être déplacé en direction longitudinale à la bande (7) et qu'il présente une ouverture (46) relative au séparateur (19a) qui est réglable transversalement et qui est munie d'une lèvre de réparation (45) montée dans une monture (44) alignée de façon visible dans la carcasse du séparateur.

### ACTIVITE DE L'INVENTION

L'invention concerne l'amélioration des performances des procédés connus en faisant que l'opération de séparation de l'huile ou des liquides huileux soit plus efficace et continue.

L'objet de l'invention concerne également l'incorporation de moyens de contrôle qui, tout en gardant des cotes de montage, évitent l'acumulation d'eau ou de liquides non huileux, aux extrémités de la bande imprégnée L'invention concerne aussi l'incorporation de moyens de rasage, de grattage ou de séparation agissant superficiellement, continuement et simultanément tout le large de la bande transporteuse qui s'adaptent élastiquement à ladite bande pour répondre aux irrégularités, aux distensions et aux autres problèmes de ladite bande.

### DESCRIPTION DU MODELE

Selon l'invention, on a développé un dispositif améliorant les performances des systèmes connus, et tout en étant un système à bande continue en projection verticale, il est pourvu des moyens indiqués dans l'"Activité de l'invention" pour obtenir positivement les avantages proposés dans l'invention.
1.- Une des caractéristiques de l'invention est que la raclette de séparation ou grattoir de séparation d'huile est monté par rapport à la bande transporteuse avec une séparation de 1 ou 2 mm à chaque extrémité, lesquels n'affectent pas la raclette proprement dite, de façon que l'huile extraite soit pratiquement libre d'eau et/ou de liquides réfrigérants, de ceux tendant à se déplacer vers les extrémités de la bande dans les systèmes à bande verticale, bien que la plupart du liquide adhéré à celle-ci est de l'huile. Cette huile est, selon cette caractéristique de séparation, parfois réutilisée pour des applications moins importantes.
2.- Un autre détail essentiellement caractéristique de l'invention est l'incoporation de moyens de réglage de la raclette ou grattoir au moyen d'un système élastique d'auto-réglage, en s'adaptant constamment à la pression de la bande qui, en maintenant un dessin droit de la raclette et une position légèrement par dessus 0°, lui confère une grande efficacité d'extraction, en maintenant automatiquement et en permanence ladite tension quelque soit la pression de la bande exercée par la bande transporteuse, en autocorrigeant le contact du bord ou lèvre collectrice montée à une position de raisonnement constant avec ladite bande.

Ceci étant une amélioration évidente, puisque l'on combine dans un système unique les avantages de tous les systèmes connus, et que cela permet que le réfrigérant que nous désirons obtenir retourne au dépôt, ce qui n'est pas possible avec les systèmes expliqués.

L'invention concerne aussi les caractéristiques essentielles, auxquelles nous ferons référence dans les feuilles de dessins ci-joint, an représentant d'une façon schématique et à mode d'exemple les détails préférés de l' invention.

### Les Dessins:

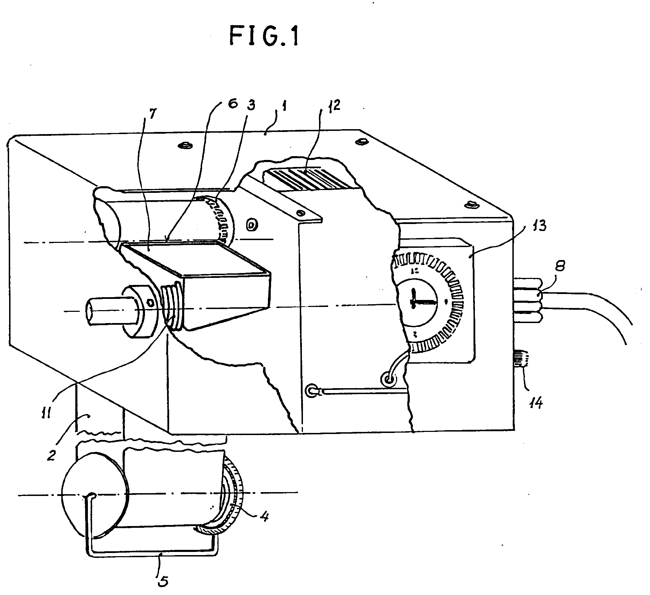

La figure 1, est une vue en perspective de l'ensemble, en représentant sa carcasse partiellement coupée pour voir les organes internes.

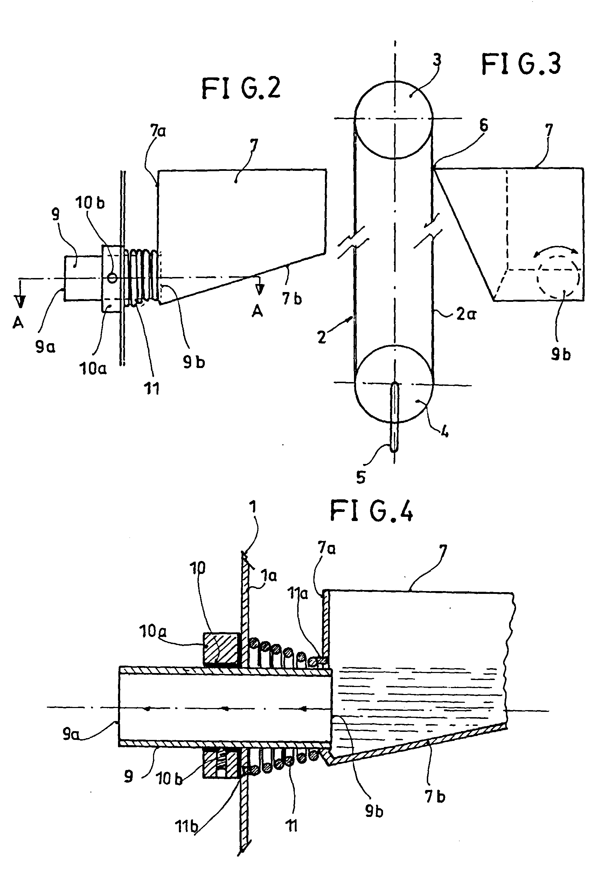

La figure 2, est une vue en projection latérale sectionnée de la cuvette collectrice, des organes de montage, de la vidange et de la tension.
La figure 3, est une vue schématiue coupée verticalement et transversalement par la cuvette collectrice et la bande transporteuse.
La figure 4 est une vue augmentée et sectionnée par la ligne A-A de la figure 2.

### DESCRIPTION DES DESSINS

Par rapport auxdits dessins, les références consignées dans ceux-ci distinguent les différentes parties intégrant l'invention.

L'ensemble est logé dans une carcasse (1) extérieure de protection des mécanismes du récupérateur d'huiles, équipés de la bande transporteuse (2), disposée verticalement, partiellement à l'intérieur et partiellement à l'extérieur, de ladite carcasse (1). :

L'inférieure pour être immergée dans le récipient qui contient le mélange hydraulique.

La partie intérieure supérieure est monté sur un cordon d'entraînement (3) actionné par un motoréducteur (12) connecté à celle-ci et la partie extérieure inférieure par un cordón inférieur de contrepoids et tendu (4) muni d'un anneau de sûreté et de centrage (5).

La bande transporteuse pour l'absorption ou l'adhérence de l'huile par l'extrémité inférieure, est immergée dans le dépôt de liquide mélangé ou du mélange hydraulique (eau réfrigérante), en absorbant l'huile par adhérence et en l'élevant pour, la récupérer tangentiellement en frôlant la face (2a) de la bande (2). Le bord ou côté (6) d'un ramaseur qui est une cuvette collectrice (7) montée par un de ses côtés (7a) sur un élément tubulaire (9) articulé, fait la fonction d'un arbre-support et d'un conduit de vidange latéral (9a) de l'huile récupérée. Des éléments tubulaires (9) dont l'embouchure intérieure (9b) est disposée à une position tangentielle au fond (7b) de la cuvette, un fond avec versant vers l'embouchure (9b) de la vidange (9a).

Elément tubulaire (9) où est monté un ressort à boudin conique (11) enfilé sur le même plan, en agissant transversalement contre la cuvette collectrice (7) en maintenant la position de son bord ou lèvre de ramassager (6) permanente réglée contre la surface (2a) de la bande (2) en maintenant le lèvre ou bord de ramassager autoreglément pressioné contre cette bande, en s'adaptant élastiquement aux modifictions pouvant avoir lieu, et en maintenant un contact constant avec la face (2a) de ladite bande.

Le ressort à boudins conique (11) a, à ces effets, une extrémité (11a) enclenchée sur la paroi latérale (7a) de la cuvette collectrice (7) et une extrémité opposée (11b) avec un coussinet (10) monté entre l'élément tubulaire (9) et la paroi latérale (1a) de la carcasse, en étant bloqué par une bride annulaire (10a) fixée par une goupille radiale (10b) sur ledit élément tubulaire (9) de vidange (9a).

Le couple de tensión de ressort (11) calculé en fonction de la pression que la bande puisse exercer contre le bord ou lèvre collectrice (6) de la cuvette collectrice (7) est disposé en permanence pour demeurer en contact contre la face (2a) de la bande (2).

Ainsi, si la bande (2) est distendue à cause de la cession de la pression de la bande (11), elle compense la différence en approchant la cuvette de manière synchronisée et simultanée de ladite distension. Si la pression de la bande (2) augmente, le ressort (11) cède en maintenant toujours le bord ou lèvre collectrice (6) en contact permanent avec la face (2a) de la bande collectrice (2).

La carcasse (11) est pourvue extérieurement d'une montre à programmateur (13) et latéralement de l'amenée du courant (8) et d'un fusible de protection (14).

Une fois convenablement décrite la nature du modèle, il faut remarquer que celui-ci ne se limite pas aux étails exacts de cette exposition, mais que tout au contraire, on y introduira les modifications considérées opportunes, si elles n'altèrent pas les carctéristiques essentielles du modèle que l'on revendique à la suite.

## Revendications

1. DISPOSITIF SEPARATEUR D'HUILES D'UN LIT DE MELANGE HYDRAULIQUE, du type disposant d'une bande verticale transporteuse (2) ayant une face proche (2a) de celle qui adhère le mélange huileux résiduel, qui est entraînée par un cordon supérieur (3) et tendue par un autre inférieur immergé (4) ou contrepoids. pourvu d'un anneau de sûreté et de centrage (8) qui est caractérisé en ce qu'il est muni d'un ramasseur ou cuvette (7) latéralement monté sur un élément tubulaire (9) et de vidange (9a), ayant un bord ou une lèvre collectrice respective (6) à une distance de 1-2 mm du cordon supérieur (3) d'entraînement et en contact permanent tangentiel avec la face (2a) d'adhérence du mélange huileux au moyen de l'organe élastique respectif qui maintient l'autoréglage permanent du contact dudit bord ou lèvre collectrice (6) contre ladite face (2a).

2. DISPOSITIF SEPARATEUR D'HUILES D'UN LIT DE MELANGE HYDRAULIQUE, selon la revendication 1, ledit organe élastique de tension pour le contac permanent du bord de lèvre réciproque (6) contre la face (a) de la bande (2), est carctérisé en ce qu'il s'agit d'un ressort à boudin conique (11) enfilé sur l'élément tubulaire latéral (9) entre la face latérale (7a) de la cuvette (7) et le flanc (1a) de la carcasse (1) de façon qu'une extrémité (11a) dudit resort (11) soit enclenchée sur la face latérale (7a) de la cuvette (7) et l'autre est enclenchée sur le coussinet (10) monté sur l'élément tubulaire (9).

3. DISPOSITIF SEPARATEUR D'HUILES D'UN LIT DE MELANGE HYDRAULIQUE, selon les revendications 1 et 2 le ressort (11) est caractérisé en ce que son pas de torsión maintient un contact permanent du bord ou lèvre collectrice (6) de la cuvette (7) avec une zone supérieure procche de la face (2a) de la bande (2) par dessous le cordón supérieur d'entraînement (3).

4. DISPOSITIF SEPARATEUR D'HUILES D'UN LIT DE MELANGE HYDRAULIQUE, selon les revendications 1 et 2, l'élément tubulaire latéral de supporte (9) est caractérisé en ce que il est pourvu d'une embouchure intérieure (9b) au même niveau que le fond (7b) de la cuvette (7) et un embouchure extrème (9a) pour vidanger ou vider le mélange huileux ramassé.

5. DISPOSITIF SEPARATEUR D'HUILES D'UN LIT DE MELANGE HYDRAULIQUE, selon la revendiction 4, une cuvette (7) ayant un fond (7b) qui est caractérisée en ce que ledit fond a un versant incliné vers l'embouchure (9b) du conduit tubulaire (9) de vidange et de support.

6. DISPOSITIF SEPARATEUR D'HUILES D'UN LIT DE MELANGE HYDRAULIQUE, selon la revendication 2 où le coussinet (10) monté sur l'élément tubulaire (9) est caractérisé en ce qu'il est attaché par une bride annulaire (10a) fixée par une goupille radiale (10b) contre le support tubulaire lui-même (9) pour assurer les torsions d'autoréglage de celles-ci et de la cuvette (7) requises par le ressort (11).
